# EUROPÄISCHE PATENTSCHRIFT

(11) **EP 0 724 102 B1**
(45) Veröffentlichungstag und Bekanntmachung des Hinweises auf die Patenterteilung: **02.02.2000**
(21) Anmeldenummer: 96101532.8
(22) Anmeldetag: 26.11.1991
(51) Int. Cl.: F16L 3/015, H02G 11/00

(54) **Leitungsführungsanordnung**
Pipe guide arrangement
Dispositif de guidage de tuyaux

(43) Veröffentlichungstag der Anmeldung: 31.07.1996
(62) Teilanmeldung aus: 91120167.1
(73) Patentinhaber: Kabelschlepp Gesellschaft mit beschränkter Haftung, 57074 Siegen (DE)
(72) Erfinder: Meier, Karl, 91180 Heideck (DE); Steff, Josef, 91802 Meinheim (DE)
(74) Vertreter: Kahlhöfer, Hermann, Dipl.-Phys.

(56) Entgegenhaltungen:
- FR-A- 2 640 599
- US-A- 3 473 769
- US-A- 3 630 325

## Beschreibung

Die Erfindung betrifft eine Leitungsführungsanordnung gemäß Oberbegriff des Patentanspruches 1.

Bei relativ großen Bewegungsstrecken von horizontal hin- und herbeweglichen Einrichtungen kommt es zu entsprechend großen Obertrumlängen dann, wenn sich die bewegliche Einrichtung in derjenigen Endstellung befindet, die zur kürzesten Untertrumlänge führt. Bei einer raschen Bewegung der beweglichen Einrichtung in Richtung zu dem zwischen Obertrum und Untertrum gebildeten Schleifenbereich, insbesondere mit starker Beschleunigung der beweglichen Einrichtung, kommt es aufgrund der auf das Obertrum einwirkenden Schubkraft leicht zu Verwerfungen des Obertrums unter Buckel- oder gar Knickbildung. Dies führt zu einer starken mechanischen Belastung der Leitungsführungsanordnung und der damit geführten Leitungsanordnung.

Dieses Problem wird bei der eingangs angegebenen Leitungsführungsanordnung erfindungsgemäß dadurch überwunden, daß in dem Leitungsführungskanal eine Niederhalteeinrichtung angeordnet ist, welche das Obertrum in dem Bereich zwischen dem feststehenden Leitungsanordnungsende und derjenigen Endstellung des beweglichen Leitungsanordnungsendes in welcher das Untertrum am kürzesten ist, am Boden des Leitungsführungskanals niederhält.

Die Niederhaltevorrichtung wird vorzugsweise durch zwei Niederhalteleisten gebildet, die sich in Längsrichtung des Leitungsführungskanals in etwa über den Bereich zwischen dem feststehenden Leitungsanordnungsende und derjenigen Endstellung des beweglichen Leitungsanordnungsendes, in welcher das Untertrum am kürzesten ist, erstrecken, die von je einer der beiden einander gegenüberliegenden Seiteninnenwände des Leitungsführungskanals in Richtung aufeinanderzu abstehen und die in einem lichten Abstand vom Boden des Leitungsführungskanals verlaufen, der etwas größer ist als die Dicke der Leitungsanordnung.

Besonders vorteilhaft ist es, die Niederhalteeinrichtung bei einer Leitungsführungsanordnung anzuwenden, in deren Schleifenbereich eine mit dem Schleifenbereich mitbewegliche Rolle angeordnet ist, auf welcher die Leitungsführungsanordnung bei einer Bewegung der Leitungsanordnung abrollt. Die Rolle weist vorzugsweise einen Durchmesser auf, der größer ist als der Schleifendurchmesser der Leitungsanordnung bei nicht vorhandener Rolle. In besonders bevorzugter Weise ist die Rolle lose in dem Schleifenbereich angeordnet. Der Rollenumfang sollte gegenüber der Leitungsanordnung bzw. einem die Leitungsanordnung aufnehmenden Leitungsaufnahmekanal eine solche Reibung aufweisen, daß die Leitungsanordnung bzw. der Leitungsaufnahmekanal bei einer auf das Obertrum einwirkenden Schubkraft nicht vom Rollenumfang abhebt. Deshalb ist der Rollenumfang vorzugsweise mit einem Material wie Gummi oder relativ weichem Kunststoff aufgebaut, das im Zusammenwirken mit dem Material der Leitungsanordnung bzw. des Leitungsaufnahmekanals zu einer derartigen Reibungskraft führt, daß ein derartiges Abheben der Leitungsanordnung bzw. des Leitungsaufnahmekanals von dem Rollenumfang vermieden wird.

Die Rolle verhindert einerseits bleibende buckelartige Verformungen der Leitungsanordnung bzw. des Leitungsaufnahmekanals in Folge längeren Stillstands der beweglichen Einrichtung. Andererseits kann mit der Rolle der gewünschte Schleifendurchmesser vorgegeben werden. Desweiteren wirkt sich die Rolle als Dämpfungsglied aus, das Schwingungen dämpft, die bei schneller Hin- und Herbewegung der beweglichen Einrichtung im Obertrumbereich auftreten.

Die Erfindung wird nun anhand von Ausführungsbeispielen näher erläutert. In den Zeichnungen zeigen:
- Fig. 1 und 2: in schematisierter Seitenansicht eine Leitungsführungsanordnung mit Niederhalteeinrichtung, wobei in den Fig. 1 und 2 entgegengesetzte Endpositionen der beweglichen Einrichtung dargestellt sind;
- Fig. 3: eine Querschnittsdarstellung einer Leitungsführungsanordnung mit einer Niederhalteeinrichtung gemäß Fig. 1 und 2; und
- Fig. 4 und 5: in schematischer Seitendarstellung eine Leitungsführungsanordnung mit einer im Schleifenbereich angeordneten Rolle.

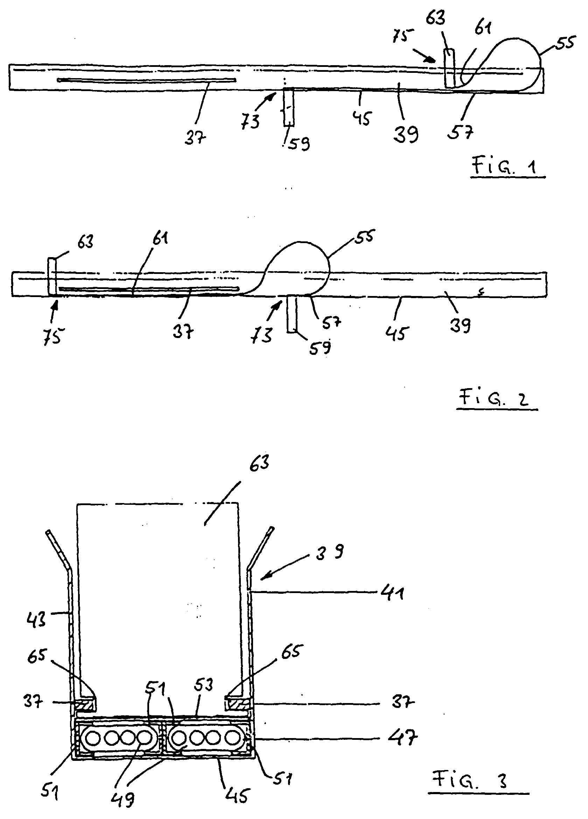

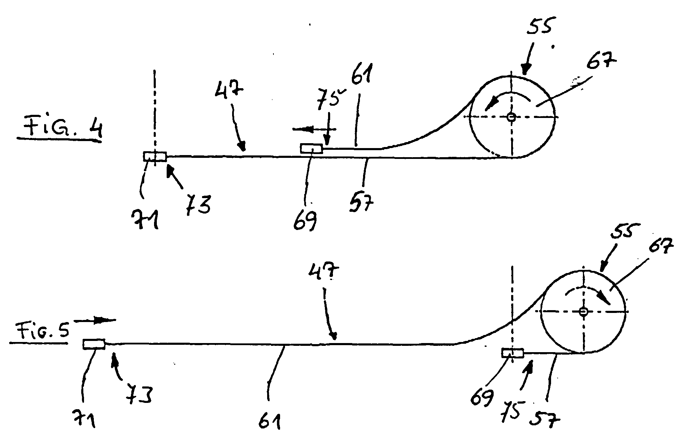

In den Fig. 1 bis 3 ist eine Ausführungsform einer Leitungsführungsanordnung mit Niederhalteleisten in schmatischer Weise dargestellt. Die Querschnittsdarstellung in Fig. 3 zeigt einen oben offenen Leitungsführungskanal 39 mit Seitenwänden 41 und 43. Auf einem Kanalboden 45 befindet sich eine Leitungsanordnung 47 mit zwei nebeneinander angeordneten Bandkabeln 49, die je zwischen zwei sich seitlich gegenüberliegenden Gleitrinnen 51 angeordnet sind, wobei die vier Gleitrinnen mittels in Längsrichtung der Leitungsanordnung 47 im Abstand voneinander angeordneter Querlaschen 53 zusammen mit den Bandkabeln 49 zu der Leitungsanordnung 47 zusammengefaßt sind. In geringem Abstand oberhalb der Querlaschen 53 befinden sich die beiden Niederhalteleisten 37, die von der Innenseite je einer der beiden Seitenwände 41 und 43 in den Innenraum des Leitungsführungskanals 39 hineinragen.

Wie in den Fig. 1 und 2 angedeutet ist, ist das vom Schleifenbereich 55 abliegende Ende 73 des Untertrums 57 mit dem oberen Ende einer feststehenden Fußplatte 59 verbunden. Das vom Schleifenbereich 55 abliegende freie Ende 75 des Obertrums 61 ist mit einer nach oben hochstehenden, beweglichen, als Abstandshalter dienenden Kopfplatte 63 verbunden. Die Fußplatte 59 ist mit einer nicht dargestellten feststehenden Einrichtung verbunden. Die Kopfplatte 63 ist mit einer nicht dargestellten hin- und herbeweglichen Einrichtung verbunden.

Bei einer Bewegung der beweglichen Einrichtung zwischen ihren beiden Endpositionen bewegt sich die Kopfplatte 63 zwischen zwei Enbereichen, die in den Fig. 1 und 2 dargestellt sind. Die Niederhalteleisten 37 sind zwischen der Position der feststehenden Fußplatte 59 und der in Fig. 2 gezeigten linken Endstellung der Kopfplatte 63, in welcher das Untertrum 57 am kürzesten ist, angeordnet. Die Niederhalteleisten 37 sind auf diesen Bereich der Bewegungsbahn der beweglichen Kopfplatte 63 beschränkt, um einerseits nicht mit dem Schleifenbereich 55 der Leitungsanordnung 47 zu kollidieren und weil andererseits Verwerfungen und Buckelbildungen aufgrund einer raschen Bewegung der Kopfplatte 63 ohne Vorhandensein der Niederhalteleisten 37 nur dann auftreten, wenn von der Kopfplatte 63 ein besonders langes Obertrum 61 geschoben wird.

Damit die von oben in den Leitungsführungskanal 39 hineinragende Kopfplatte 63 von den Niederhalteleisten 37 unbehindert in dem Leitungsführungskanal 39 bewegt werden kann, ist die Kopfplatte 63 bei der in Fig. 3 gezeigten Ausführungsform beidseits mit je einer Aussparung 65 versehen, in welche je eine der beiden Niederhalteleisten 37 bewegungsstörungsfrei hineinragen kann.

Es wäre auch möglich, die Breite der Kopfplatte soweit zu reduzieren, daß sie geringer ist als der lichte Abstand zwischen den beiden zueinander weisenden Niederhalteleisten 37.

Die Fig. 4 und 5 zeigen eine schematisierte Seitenansicht einer Leitungsführungsanordnung, in deren Schleifenbereich eine Rolle 67 lose angeordnet ist. Der Schleifenbereich 55 der Leitungsanordnung 47 rollt auf dem Umfang der Rolle 67 ab, wenn eine bewegliche Einrichtung 69 gegenüber einer feststehenden Einrichtung 71 horizontal hin- und herbewegt wird. Dabei kommt es zu einer Verlagerung des Schleifenbereichs 55, dem die Rolle 67 folgt.

Der Begriff "Rolle" ist vorliegend sehr allgemein zu verstehen. Er soll hier walzenartige Gebilde, entweder massiv oder hohl, kugelartige Gebilde und polygonale Gebilde umfassen.

## Patentansprüche

1. Leitungsführungsanordnung mit einem Leitungsführungskanal (39) und einer darin geführten, mindestens eine ein- oder mehradrige Leitung aufweisende Leitungsanordnung (47), die ein Untertrum (57) und ein parallel drüber geführtes Obertrum (61) aufweist, die dazwischen in einem Schleifenbereich (55) ineinander übergehen, wobei mindestens derjenige Bereich der Leitungsanordnung (47), mit dem die beiden Trums (57, 61) zueinander weisen, mit Material guter Aneinandergleitfähigkeit aufgebaut sind, wobei das eine Leitungsanordnungsende (73) feststehend und das andere Leitungsanordnungsende (75) hin und her beweglich ist,
dadurch gekennzeichnet,
daß in dem Leitungsführungskanal (39) eine Niederhaltereinrichtung angeordnet ist, welche das Obertrum (61) in dem Bereich zwischen dem feststehenden Leitungsanordnungsende (73) und derjenigen Endstellung des beweglichen Leitungsanordnungsendes, in welcher das Untertrum (57) am kürzesten ist, am Kanalboden (45) des Leitungsführungskanals (39) niederhält.

2. Leitungsführungsanordnung nach Anspruch 1,
dadurch gekennzeichnet,
daß die Niederhalteeinrichtung durch zwei Niederhalteleisten (37) gebildet ist, die sich in Längsrichtung des Leitungsführungskanals (39) in etwa über den Bereich zwischen dem feststehenden Leitungsanordnungsende (73) und derjenigen Endstellung des beweglichen Leitungsanordnungsendes (75), in welcher das Untertrum (57) am kürzesten ist, erstrecken, die von je einer der beiden einander gegenüberliegenden Seitenwände (41, 43) des Leitungsführungskanals (39) in Richtung aufeinanderzu abstehen und die in einem lichten Abstand vom Kanalboden (45) verlaufen, der etwas größer ist als die Dicke der Leitungsanordnung (47).

3. Leitungsführungsanordnung nach Anspruch 2, wobei das Obertrumende über einen in den Leitungsführungskanal (39) hineinragenden Abstandshalter mit der sich oberhalb des Leitungsführungskanals (39) bewegenden beweglichen Einrichtung verbunden ist,
dadurch gekennzeichnet,
daß zwischen den beiden Niederhalteleisten (37) ein derartiger lichter Abstand besteht, daß der Abstandshalter zwischen den beiden Niederhalteleisten (37) hindurchbewegbar ist.

4. Leitungsführungsanordnung nach einem der Ansprüche 1 bis 3,
dadurch gekennzeichnet,
daß der Schleifenbereich (55) der Leitungsanordnung (47) um eine mit dem Schleifenbereich (55) mitbewegliche Rolle (67) herumgeführt ist, auf welcher bei einer Bewegung der beweglichen Einrichtung (69) die Leitungsanordnung (47) abrollt.

5. Leitungsführungsanordnung nach Anspruch 4,
daß die Rolle (67) einen Durchmesser aufweist, der größer ist als der Schleifendurchmesser des Schleifenbereichs (55) bei nicht vorhandener Rolle (67).

6. Leitungsführungsanordnung nach Anspruch 4 oder 5,
dadurch gekennzeichnet,
daß die Rolle (67) lose in dem Schleifenbereich (55) angeordnet ist.

7. Leitungsführungsanordnung nach einem der Ansprüche 4 bis 6,
dadurch gekennzeichnet,
daß der Rollenumfang mit einem Material wie Gummi oder Weichkunststoff aufgebaut ist, der im Zusammenwirken mit dem Material guter Aneinandergleitfähigkeit der Leitungsanordnung (47) eine hohe Reibungskraft bewirkt.

## Claims

1. Line guiding assembly with a line guiding channel (39) and a line assembly (47) having at least one single-core or multi-core line guided therein, the line assembly (47) having a bottom length (57) and an upper length (61) guided parallel thereabove, and the two lengths merging with each other in a loop portion (55) therebetween, at least that region of the line assembly (47), with which said lengths (57, 61) are facing each other being composed with a material having good slidability, one line assembly end (73) being stationary and the other line assembly end (75) being reciprocable, characterized in that a hold-down device is disposed in the line guiding channel (39) which holds down the upper length (61) in the region between the stationary line assembly end (73) and the end position of the movable line assembly end in which the lower length (57) is shortest, and keeps it to the channel floor (45) of the line guiding channel (39).

2. Line guiding assembly according to claim 1, characterized in that the hold-down device is constituted by two hold-down rails (37) which extend longitudinally of the line guiding channel (39) approximately across the portion between the stationary line assembly end (73) and that end position of the movable one assembly end (75) in which the lower length (57) is shortest, which each projects from one of the two opposing sidewalls (41, 43) of the line guiding channel (39) towards each other and which extend at a clear distance from the channel floor (45) which is somewhat larger than the thickness of the line assembly (47).

3. Line guiding assembly, according to claim 2, wherein the upper length end is connected to the movable means moving above the line guiding channel (39) via a spacer projecting into the line guiding channel, characterized in that such a clear distance is present between the two hold-down rails (37) that the spacer is adapted to pass between the two hold-down rails (37).

4. Line guiding assembly according to one of the claims 1-3, characterized in that the loop portion (55) of the line assembly (47) is passed around a roller (67) which is movable together with the loop portion (55) and on which the line assembly (47) rolls upon movement of the movable device (69).

5. Line guiding assembly according to claim 4, characterized in that the roller (67) has a diameter which is greater than the loop diameter of the loop portion (55) when no roller (67) is present.

6. Line guiding assembly according to claim 4 or 5, characterized in that the roller (67) is loosely disposed in the loop portion (55).

7. Line guiding assembly according to one of the claims 4-6, characterized in that the roller circumference is comprised of a material from the group consisting of rubber and soft plastic material effecting a high frictional force in cooperation with the material of the line assembly (47) having good slidability.

## Revendications

1. Dispositif de guidage de ligne avec un canal (39) de guidage de ligne, et un dispositif (47) de ligne guidé dans ce dernier comportant au moins une ligne à un, ou plusieurs conducteurs, laquelle comporte un brin inférieur (57) et un brin supérieur (61) guidé parallèlement au-dessus de celui-ci, qui se rejoignent dans une zone de boucle (55) située entre eux, au moins la zone du dispositif (47) de ligne dans laquelle les deux brins (57, 61) sont orientés l'un vers l'autre étant réalisée en un matériau à bon pouvoir de glissement, et l'une des extrémités (73) du dispositif de ligne étant fixe, alors que l'autre extrémité (75) du dispositif de ligne est mobile en va-et-vient,
caractérisé en ce que
un dispositif serre-flanc est disposé dans le canal (39) de guidage de ligne, qui retient le brin supérieur (61) sur le fond (45) du canal (39) de guidage de ligne dans la zone située entre l'extrémité fixe (73) du dispositif de ligne et la position finale de l'extrémité mobile du dispositif de ligne, dans laquelle le brin inférieur (57) est le plus court.

2. Dispositif de guidage de ligne selon la revendication 1,
caractérisé en ce que
le dispositif serre-flanc est formé par deux barrettes serre-flanc (37), qui s'étendent dans la direction longitudinale du canal (39) de guidage de ligne sensiblement sur la zone située entre l'extrémité fixe (73) du dispositif de ligne et la position finale de l'extrémité mobile (75) du dispositif de ligne, dans laquelle le brin inférieur (57) est le plus court, qui dépassent de l'une des deux parois latérales (41, 43) opposées du canal (39) de guidage de ligne en étant orientées l'une vers l'autre, et qui sont disposées à une distance par rapport au fond (45) du canal qui est légèrement supérieure à l'épaisseur du dispositif (47) de ligne.

3. Dispositif de guidage de ligne selon la revendication 2, dans le cas duquel l'extrémité du brin supérieur est reliée au dispositif mobile se déplaçant au-dessus du canal (39) de guidage de ligne par l'intermédiaire d'un écarteur pénétrant dans le canal (39) de guidage de ligne,
caractérisé en ce que
la distance libre existante entre les deux barrettes serre-flanc (37) est telle que l'écarteur peut passer entre les deux barrettes serre-flanc (37).

4. Dispositif de guidage de ligne selon l'une des revendications 1 à 3,
caractérisé en ce que
la zone de boucle (55) du dispositif (47) de ligne entoure une poulie (67) qui est mobile avec la zone de boucle (55), sur laquelle le dispositif (47) de ligne se déroule lors d'un déplacement du dispositif mobile (69).

5. Dispositif de guidage selon la revendication 4,
caractérisé en ce que
la poulie (67) présente un diamètre qui est supérieur au diamètre de la boucle de la zone de boucle (55) lorsque la poulie (67) n'est pas présente.

6. Dispositif de guidage de ligne selon la revendication 4 ou 5,
caractérisé en ce que
la poulie (67) est disposée de façon lâche dans la zone de boucle (55).

7. Dispositif de guidage de ligne selon l'une des revendications 4 à 6,
caractérisé en ce que
la circonférence de la poulie est réalisée avec un matériau tel que du caoutchouc ou une matière plastique souple qui, en association avec le matériau à bon pouvoir de glissement du dispositif (47) de ligne, engendre une force de frottement élevée.
